# DEMANDE DE BREVET EUROPEEN

(11) **EP 0 577 534 A1**
(43) Date de publication de la demande: **05.01.1994**
(21) Numéro de dépôt: 93440045.8
(22) Date de dépôt: 02.06.1993
(51) Int. Cl.: A23L 1/48

(54) **Procédé de préparation culinaire, de conditionnement de distribution et de traitement culinaire ultérieur de plats cuisinés**

(30) Priorité: 02.06.1992 FR 9206817
(71) Demandeur: R. FRITSCH S.A., 68270 Wittenheim (FR)
(72) Inventeur: Fritsch, Edgar, F-68270 Wittenheim (FR); Mougin, Damien, F-68420 Eguisheim (FR)
(74) Mandataire: Metz, Paul

(57) **Abrégé**

Le procédé de préparation culinaire, de conditionnement, de distribution et de traitement culinaire ultérieur automatisé de plats cuisinés comporte une préparation culinaire des aliments et leur conditionnement, ainsi que la confection, l'édition et l'apposition d'un message codé de traitement culinaire ultérieur dans un lieu spécialisé, leur conservation et leur distribution, la phase de traitement culinaire ultérieur selon le message codé étant effectuée de façon automatique et autonome à proximité du lieu de consommation dans un appareil fonctionnant à partir d'ordres consignés dans le message codé de traitement ultérieur.

Cette invention intéresse les industries alimentaires de plats cuisinés et les constructeurs d'appareils de cuisson.

## Description

L'invention se rapporte à un procédé de préparation et de cuisson de plats cuisinés mettant en oeuvre un traitement culinaire ultérieur.

Actuellement, l'organisation de la préparation des repas destinés à des collectivités, par exemple cantines scolaires, cantines et restaurants d'entreprises etc... est assurée généralement de la manière suivante.

Les plats sont préparés et cuits entièrement dans une cuisine centrale disposant, d'une part, d'installations semi-industrielles destinées à la préparation de grandes quantités de plats les plus variés, et d'autre part, de moyens de cuisson adaptés au mode requis par les recettes, tels que fours, plaques, grills ...).

Les plats ainsi préparés sont ensuite distribués vers les cantines. Ils sont alors simplement remis en température juste avant le service par groupes et par étages.

Le but général est de réchauffer globalement tous les plats à servir ensemble pour permettre aux consommateurs de les manger chauds.

Cette méthode d'organisation et les moyens de réchauffage rapides employés nuisent à la qualité des repas servis. En effet, la durée irrégulière entre la fin de la cuisson dans la cuisine centrale et le moment du réchauffage et du service ne permet pas une gestion précise et une adaptation de la cuisson des différents plats.

De plus, le réchauffage ou la remise en température au niveau des points de distribution est souvent effectué par un personnel non spécialisé dont la seule tâche consiste à mettre les appareils en service, sans distinction de la nature ni de la quantité de préparation culinaire présente dans chaque plat.

Ainsi, les repas servis n'ont que peu de chance d'être remis en température convenablement et se retrouvent facilement desséchés, trop cuits ou sans goût, ou bien mal ou trop réchauffés.

Une possibilité pour remédier à ces inconvénients serait de tenir compte des différents paramètres de la phase de réchauffage, variables selon la nature et la qualité des mets cuisinés distribués.

Cette adaptation pourrait être contrôlée par le personnel, mais cela correspondrait à une formation différente de ce personnel et à une astreinte et vigilance supplémentaires qui conduiraient à une répartition nouvelle des tâches au niveau des lieux de distribution et à de nouvelles conditions de travail.

On a également imaginé de joindre à chaque plat une carte perforée, ou de perforer une zone du conditionnement, constituant un programme sommaire définissant les conditions de remise en température.

Par exemple, ce système est connu pour un automate distributeur de repas après introduction de pièces. Les barquettes individuelles sont munies d'une languette latérale perforée. Le four à micro-ondes détecte le code, lit le programme et adapte le temps de réchauffage en fonction du plat sélectionné par l 'utilisateur.

Ce système nécessite malheureusement un dispositif spécialisé de lecture et de gestion du réchauffage, qui correspond à un investissement disproportionné au regard de l'amélioration très relative de la qualité, puisque celle-ci concerne seulement une mise à la température de consommation.

L'idée de l'invention est plus fondamentalement d'améliorer la gestion de la préparation des repas et leur qualité en effectuant, au niveau du lieu central, la préparation culinaire et une partie de la cuisson des plats. Les repas sont ensuite conditionnés dans des emballages individuels, porteurs d'un programme individualisé de cuisson terminale appelée traitement culinaire ultérieur, ou d'une remise personnalisée en température. Après distribution, la cuisson terminale a lieu sur place dans un automate de cuisson en fonction des instructions du message de phase terminale associé à chaque emballage.

La réalisation d'une partie de la cuisson en cuisine centrale et de la phase finale sur le lieu de distribution améliore sensiblement la qualité gustative des plats servis. De plus, le conditionnement et le message spécifique accompagnant chaque plat permettent une réelle adaptation du mode de cuisson par l'automate de traitement culinaire ultérieur.

Ce procédé est particulièrement applicable au niveau de la préparation des repas de collectivités. On peut envisager également une extension de son utilisation dans le grand public, c'est-à-dire par les réseaux de la grande distribution. Par exemple, les plats après une cuisson partielle sont congelés dans un emballage individuel muni d'un message-programme de traitement culinaire ultérieur, et proposés à la vente dans les rayons des supermarchés.

L'utilisateur final, par exemple la ménagère, voit son rôle simplifié à l'extrême. Elle se contente de placer le plat à l'intérieur de son four ou appareil de cuisson, celui-ci fonctionnant ensuite automatiquement à partir des ordres consignés sur le message codé de traitement culinaire ultérieur.

Plus précisément, le procédé de préparation culinaire avec traitement ultérieur automatisé comprend les étapes suivantes :
. préparation des aliments et des ingrédients en vue d'une recette déterminée ;
. réalisation d'une cuisson partielle qui mettra les aliments dans un état de préparation culinaire avancé ou suffisant pour ne nécessiter qu'une phase terminale de cuisson ;
. enregistrement sous forme codée des différentes instructions correspondant à la phase terminale de cuisson ;
. émission du code sous forme matérielle sur un support destiné à accompagner le plat ;
. conditionnement des aliments précuits dans un emballage porteur ou accompagnant le message codé de traitement culinaire ultérieur ;
. opération rendant le plat cuisiné apte à une conservation de courte ou de longue durée ;
. utilisation du réseau de distribution existant en fonction de l'utilisateur final : ménagère, collectivité, restaurateur ou autre ;
. réalisation de la phase terminale de cuisson à proximité du lieu de consommation dans un automate fonctionnant, pour chaque recette, à partir des ordres établis et consignés sur le message codé de traitement culinaire ultérieur.

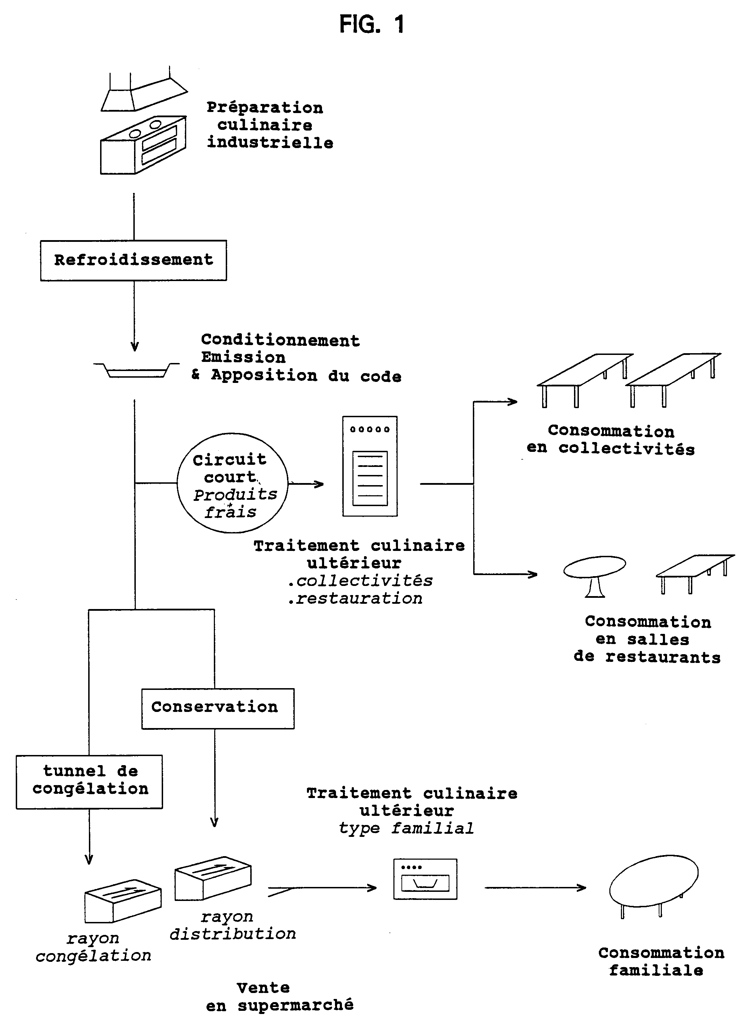

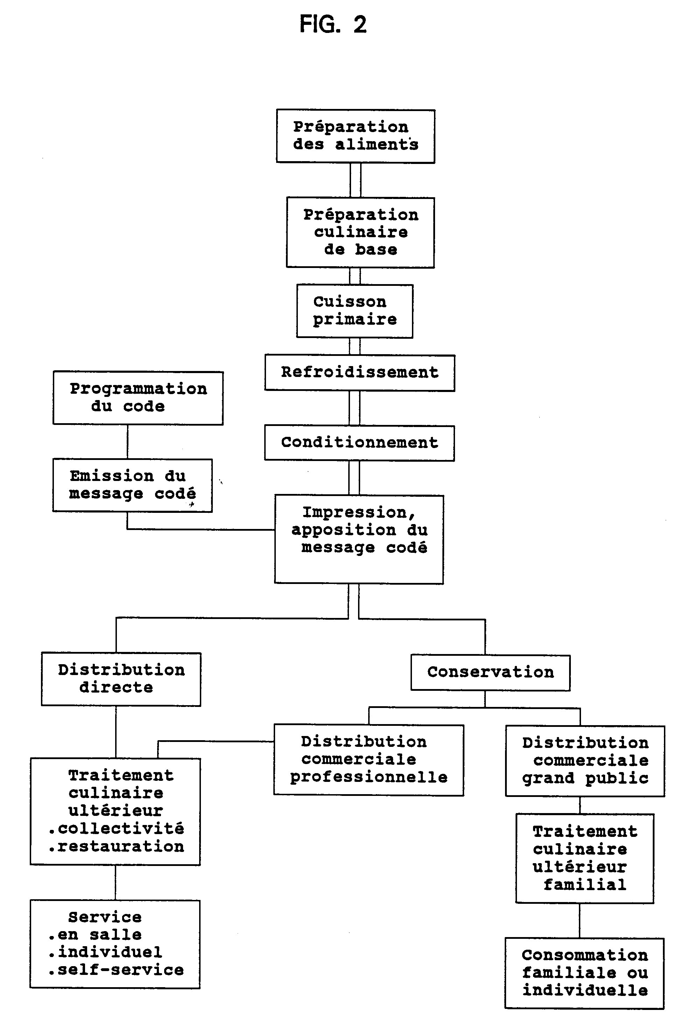

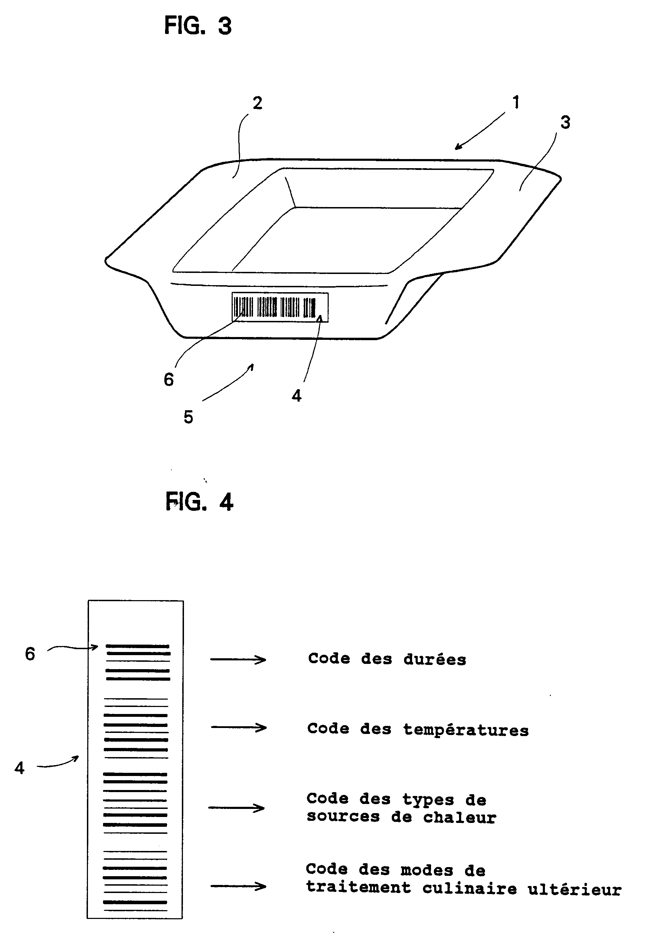

Les caractéristiques techniques et d'autres avantages de l'invention sont consignés dans la description qui suit, effectuée à titre d'exemple non limitatif sur un mode d'exécution en référence aux dessins accompagnants dans lesquels :
. la figure 1 est un schéma général des étapes successives du procédé ;
. la figure 2 est un organigramme de détail montrant la suite des principales instructions ;
. la figure 3 représente en perspective un exemple de réalisation pour un emballage individuel portant un message du type code à barres ;
. la figure 4 est une vue de détail en plan des différentes instructions d'un message selon un code à barres avec la signification des groupes.

La première étape commune à toutes les applications de l'invention consiste en la préparation en grande quantité des plats dans une cuisine centrale, du type cuisine de collectivité ou' cuisine industrielle.

A ce niveau ont lieu toutes les opérations préalables, lavage, découpage, vidage, étrognage, etc.. des aliments, puis la préparation culinaire proprement dite, avec les différentes phases correspondant à la recette, comprenant l'introduction des aliments, d'épices et de condiments dans des proportions déterminées et toute autre suggestion de recette.

La préparation culinaire subit alors une cuisson partielle correspondant au mieux au plat et aux qualités gustatives que l'on veut préserver.

Le rôle de cette cuisson partielle est d'assurer d'une part une stabilisation des ingrédients utilisés dans la préparation, par exemple d'éviter les oxydations, la dessiccation, la perte de poids, l'appauvrissement en goût, et d'autre part de réaliser par la chaleur les conditions alimentaires hygiéniques du plat permettant son conditionnement et son transport ou sa conservation. Suite à cette cuisson primaire, le plat ne nécessite plus qu'une phase terminale de cuisson ou de remise en température appelée ci-après traitement culinaire ultérieur.

Par traitement culinaire ultérieur il faut entendre toute opération finale avant le service. Le traitement peut aller de la simple remise en température, jusqu'à une cuisson terminale faisant suite à la cuisson primaire consistant en une pré-cuisson ou une cuisson partielle ou quasi totale.

Au cours de ce traitement, on met en oeuvre, simultanément ou individuellement ou en les combinant à des degrés divers, les sources de chaleur les mieux adaptées à la particularité du plat, choisies parmi celles qui existent actuellement, à savoir : air chaud pulsé, vapeur, énergie radioélectrique hyperfréquence ou micro-ondes, résistances électriques, rayonnement infrarouge, induction..., et éventuellement la chaleur du gaz.

Un refroidissement réglementaire sanitaire est prévu juste après cette première phase de préparation culinaire avec cuisson partielle.

Le conditionnement, c'est-à-dire la mise dans un contenant-emballage, est effectué à la suite de ces opérations. Le mode de conditionnement sera évidemment adapté à l'utilisation ultérieure prévue.

De manière avantageuse on préférera des emballages individuels, par exemple ceux destinés aux cantines ou aux circuits de distribution directe ou de restauration, notamment collective, ou bien indifféremment des emballages individuels ou des portions familiales dans le cas d'une distribution commerciale relative à la grande consommation.

Pour des raisons évidentes de conservation et de manipulation, le conditionnement s'effectuera de préférence dans des récipients qui sont ensuite hermétiquement clos, par exemple au moyen d'un couvercle scellé.

Parallèlement à la préparation culinaire des repas et à leur répartition et conditionnement est émis sur un support matériel un message codé de traitement culinaire ultérieur destiné à accompagner chacun des plats conditionnés vers le lieu de distribution.

Le message est émis et imprimé sur une étiquette ou directement sur l'emballage.

Ce message contient les instructions individualisées adaptées à chaque plat, spécifiant les caractéristiques du mode de traitement culinaire ultérieur.

Ce message est destiné à être décodé par un appareil de remise en température ou de cuisson, par exemple l'appareil de cuisson du lieu de distribution des repas, de façon à adapter les conditions du traitement culinaire ultérieur à chaque plat spécifique.

Le message codé peut être apposé sur l'emballage ou accompagner celui-ci de toute autre manière. Par exemple, il peut être inscrit sur une étiquette détachable associée à l'emballage, soit jointe, soit de manière distincte. Notamment, l'étiquette détachable pourra n'être reliée à l'emballage que par un lien ou une liaison facilement sectionnable.

Les figures 3 et 4 représentent un exemple de réalisation d'un emballage associé à un message codé. L'emballage prend la forme d'un plat de service ou de consommation 1 pouvant servir d'assiette, de forme générale rectangulaire, muni sur deux bords opposés d'extensions planes horizontales 2 et 3 aux coins arrondis formant poignées de préhension.

Le message est ici contenu dans un support, par exemple une étiquette adhésive 4 collée sur un des flancs 5 du corps de l'emballage. Ledit message se présente sous la forme d'un code 6 à barres contenant une série d'instructions partagées par exemple en plusieurs groupes (figure 4).

Bien entendu, on peut imaginer toutes sortes d'autres modes de réalisation du message, par exemple carte perforée conformée ou jointe à l'emballage, codage magnétique, optique, de relief etc...

Suite au conditionnement, les repas sont distribués vers des stations de traitement culinaire ultérieur, par exemple des centres de distribution directe, cantines collectives, restauration, ou autres.

Ces stations sont équipées d'enceintes de chauffe et de cuisson à sources de chaleur et de vapeur adaptées, comprenant des moyens de décodage des messages associés aux plats distribués.

Par exemple, les enceintes de chauffe et de cuisson disposeront d'un décodeur optique pour lecture des messages codés à barres apposés sur une surface du corps de l'emballage, comme dans la réalisation illustrée sur les figures 3 et 4.

La nature du message contenu dans le code peut varier du plus simple à une succession d'instructions complexes en fonction d'une part des nécessités du traitement culinaire ultérieur selon la recette, d'autre part des caractéristiques des appareils utilisés pour la cuisson terminale.

En effet, le traitement culinaire ultérieur varie notamment en fonction :
. du mode de conditionnement et des dimensions du contenant ;
. de la nature du ou des produits ;
. de la quantité, notamment du poids ;
. du temps nécessaire en fonction de la préparation ;
. d'objectifs de qualité relatifs à l'état final du produit (aspect doré, croustillant, etc...).

Le message codé contiendra donc au moins la combinaison des paramètres de durée et de température ainsi que le type de la ou des sources sèches ou humides à mettre en service ou à arrêter définissant les caractéristiques du mode de traitement culinaire ultérieur auxquelles devra se conformer l'appareil générateur de chaleur.

De manière plus perfectionnée, le message pourra commander une succession ou une combinaison de différentes énergies avec leur durée d'application. Par exemple, il pourra contenir des instructions se rapportant à des modes de cuisson par chaleur radiante, pulsée, tournante, et/ou chaleur induite, avec introduction de vapeur ou utilisation d'air pulsé, etc...

Au moment de leur introduction dans l'enceinte de traitement culinaire ultérieur, les plats passent devant un lecteur-détecteur automatique relié à un système d'analyse et de commande pour réaliser la gestion de la cuisson en fonction des paramètres contenus dans le message.

Ces paramètres sont par exemple ceux mentionnées sur la figure 4. Il s'agit par exemple de groupes tels que :
. code des durées,
. code des températures,
. code des types de sources de chaleur,
. code des modes de traitement culinaire ultérieur.

Ainsi, le traitement culinaire ultérieur se trouve précisément adapté à la nature et aux caractéristiques des plats préparés, avec comme résultat une optimisation de sa qualité gustative.

Le plat est servi directement à la fin de la phase de traitement culinaire ultérieur, soit dans le cadre d'un service en salle ou d'une distribution du type self-service (restauration collective), soit par un service individuel (prison, hôpital...), soit encore à table dans le cadre familial.

Le traitement culinaire ultérieur peut être adapté à un autre mode de distribution.

Le plat, suite à la préparation culinaire primaire en cuisine centrale industrielle et à son conditionnement dans des emballages de type commercial associés chacun à un message caractéristique de la nature du plat et de la façon de le traiter ultérieurement sur le plan culinaire, contenant des instructions spécifiques pour la mise en oeuvre de cette phase terminale, peut être dirigé vers un lieu de conservation, par exemple par surgélation, pour stockage en vue d'une distribution commerciale de détail.

Mis en vente comme repas pré-cuisiné dans les rayons spécialisés des magasins, ce plat n'exige du consommateur qu'un nombre de manipulations fort réduit avant sa consommation.

En effet, la ménagère ou plus généralement le consommateur se contentera d'introduire le plat dans une enceinte de traitement culinaire ultérieur, à l'exclusion de toute autre manipulation de réglage ou de surveillance.

Le message codé est traduit par un système adapté dont l'enceinte est munie, commandant la totalité des opérations de traitement culinaire ultérieur à la suite desquelles le plat est prêt à la consommation familiale.

A titre d'illustration, il sera décrit ci-après le fonctionnement du procédé selon l'invention dans une application à la préparation d'un plat particulier, par exemple un gratin.

Au niveau de la cuisine centrale, on réalisera les opérations suivantes :
. pelage des pommes de terre, lavage, découpage en lamelles, préparation du fromage râpé, disposition en couches successives des pommes de terre et du fromage dans les plats frottés d'ail, addition de poivre, sel, thym, puis d'un mélange lait-crème ;
. pré-cuisson de courte durée à haute température, refroidissement, puis fermeture hermétique des plats individuels.

On indique ci-après un exemple de programme de cuisson terminale contenu dans le message codé :
. 45 mn de cuisson à température douce (140°C) avec éventuellement des instructions complémentaires sur le mode de cuisson dans le cas d'un four à air pulsé et/ou vapeur ;
. 10 mn de cuisson avec rayonnement à haute température (240°C) pour obtenir l'aspect gratiné.

Il est bien entendu qu'au-delà des moyens décrits, diverses modifications évidentes et variantes simples entrent dans le cadre de la présente invention.

## Revendications

1. Procédé de préparation culinaire, de conditionnement, de distribution et de traitement culinaire automatisé de plats cuisinés, à partir d'un message codé accompagnant le plat, du type dans lequel on enregistre sous forme codée les différentes instructions correspondant à une recette, on émet le code sous forme matérielle sur un support destiné à accompagner le plat et on l'appose ou on l'imprime sur celui-ci, on conditionne les aliments dans un emballage porteur ou accompagnant le message codé, et on réalise cette recette à proximité du lieu de consommation dans une enceinte équipée d'un système automatique de lecture du code, caractérisé en ce que :
. on prépare les aliments et les ingrédients en vue d'une recette déterminée ;
. on met en oeuvre cette recette dans sa phase de préparation culinaire ;
. on ne réalise qu'un début de cuisson ou une pré-cuisson qui mettra les aliments dans un état partiellement cuisiné ou de préparation culinaire suffisant pour ne nécessiter qu'un traitement culinaire terminal ;
. on enregistre sous forme codée les différentes instructions concernant la phase terminale de la recette, dont le traitement culinaire ultérieur, et, à partir de ces informations, on émet un message codé sous forme matérielle sur un support que l'on associe à l'emballage renfermant le plat partiellement cuisiné ;
. on refroidit la préparation culinaire ;
. on rend le plat partiellement cuisiné apte à une conservation de petite ou de longue durée ;
. on utilise le réseau de distribution existant en fonction de l'utilisateur final : ménagère, collectivité, restaurateur ou autre ;
. on lit à l'aide du système automatique de lecture les messages codés et on commande diverses sources de chaleur successives et/ou combinées, et divers modes de cuisson fonctionnant, pour chaque recette, à partir des ordres établis et consignés sur le message codé pour réaliser le traitement culinaire ultérieur correspondant à la phase finale de la recette.

2. Procédé selon la revendication 1, caractérisé en ce que l'on utilise un code à barres pour la confection du message codé de traitement culinaire ultérieur.

3. Procédé selon la revendication 1, caractérisé en ce que l'on utilise une étiquette détachable pour le message codé de traitement culinaire ultérieur.

4. Procédé selon la revendication 1, caractérisé en ce que l'étiquette détachable est distincte de l'emballage.

5. Procédé selon la revendication 1, caractérisé en ce que l'étiquette détachable n'est reliée à l'emballage que par un lien ou une liaison facilement sectionnable.

6. Procédé selon la revendication 1 Caractérisé en ce que l'on ne code que les paramètres suivants :
. durée de cuisson
. température de cuisson
. mode de cuisson.

7. Procédé selon la revendication 1, caractérisé en ce que le traitement culinaire ultérieur met en jeu une commande triple de l'air pulsé, de la chaleur rayonnante et de la vapeur.

8. Procédé selon la revendication 1, caractérisé en ce que le traitement culinaire ultérieur se limite à la mise en jeu d'une commande de l'air pulsé et de la vapeur.
